# EUROPEAN PATENT SPECIFICATION

(11) **EP 2 122 504 B1**
(45) Date of publication and mention of the grant of the patent: **01.10.2014**
(21) Application number: 08701862.8
(22) Date of filing: 18.01.2008
(51) Int. Cl.: G06F 17/30, G06F 17/27

(54) **A METHOD OF EXTRACTING SECTIONS OF A DATA STREAM**
VERFAHREN ZUR EXTRAKTION VON ABSCHNITTEN AUS EINEM DATENSTROM
PROCÉDÉ D'EXTRACTION DE SECTIONS D'UN FLUX DE DONNÉES

(30) Priority: 18.01.2007 GB 0700926; 18.01.2007 GB 0700928
(43) Date of publication of application: 25.11.2009
(73) Proprietor: Roke Manor Research Limited, Romsey Hampshire SO51 0ZN (GB)
(72) Inventor: DUXBURY, Neil, Westbury Wiltshire BA13 2GF (GB)
(74) Representative: Thompson, Andrew John
(86) International application number: PCT/GB2008/000184
(87) International publication number: WO 2008/087438

(56) References cited:
- EP-A- 0 971 294
- WO-A-99/34598
- US-A1- 2005 010 952
- US-A1- 2005 132 070
- US-A1- 2006 095 262

## Description

This invention relates to a method of extracting sections of a data stream.

There are many instances where a user wishes to find and extract only certain data types from a larger body of data. The data is typically presented as a data stream, whether from a store, or in real time, and if all of the data were processed fully, this would be very slow.

EP0971294 discloses a method and apparatus for automated search and retrieval processing that includes a tokeniser, a noun phrase analyser, and a morphological analyser. The tokeniser includes a parser that extracts characters from the stream of text, an identifying element for identifying a token formed of characters in the stream of text that include lexical matter, and a filter for assigning tags to those tokens requiring further linguistic analysis. The tokeniser, in a single pass through the stream of text, determines the further linguistic processing suitable to each particular token contained in the stream of text. The noun phrase analyser annotates tokens with tags identifying characteristics of the tokens and contextually analyses each token. During processing, the noun phrase analyser can also disambiguate individual token characteristics and identify agreement between tokens. The morphological analyser organises, utilises, analyses, and generates morphological data related to the tokens. In particular, the morphological analyser locates a stored lexical expression representative of a candidate token found in a stream of natural language text, identifies a paradigm for the candidate token based upon the stored lexical expression, and applies transforms contained within the identified paradigm to the candidate token.

A particular example of searching data streams is in SPAM filtering where it is desirable to extract data having a particular label, or end point identifier, such as an email address, a domain name, a uniform resource locator, or telephone number.

In accordance with the present invention, there is provided a method according to claim 1.

The present invention provides a high performance generic extraction framework which allows data stream content to be processed at high speed and used in a real time context.

Extraction of the section is accepted if the combination of sequences in any order matches stored sequences in the section of the data stream.

Extraction of the section is rejected if the combination of sequences does not match any of the sequences in the section of the data stream; and thereafter the search continues for further instances of the combination of sequences in another section.

Preferably, a sequence comprises a series of bits having a predetermined format, such as an anchor, or a bridge.

Preferably, the anchor is a low probability sequence in the data stream.

Typically, the probability of occurrence is less than about 1%.

The combination of sequences comprises an anchor and a sequence adjacent to the anchor.

This improves throughput by reducing the likelihood of a match.

Preferably, the combination of sequences comprises at least the first and last sequence of the section.

This allows the section to be extracted immediately if a match is found, whereas a successful match with a combination of sequences which does not include both start and end points requires the additional step of identifying these before extracting the section.

In one embodiment, the combination of sequences comprises more than one sequence associated with an anchor; wherein the combination of anchor and sequences to form the section is determined; and wherein the section is only extracted if all sequences forming the section are present.

This has the effect of only extracting sections where there is a complete match.

Preferably, searches for combinations of sequences are carried out in parallel on different sections of the data stream.

This could be by splitting the data stream, or looking for different combinations of sequences in the same part of the data stream.

Preferably, the method further comprises filtering the extracted sections of the data stream; the filtering comprising determining a set of characters of interest; testing each section of the data stream for the presence of one or more of the set of characters of interest; and extracting sections in which at least one of the characters is present.

Having extracted sections which satisfy a minimum requirement, for example having a domain name format, then filtering is carried out to reduce the number of results more specifically, such as only emails having ".roke." in their address.

Preferably, the method further comprises determining a further set of characters of interest; testing for at least one character from the further set of characters in the portion of the data stream; and extracting sections in which at least one of the characters from the further sets of characters is also present in the section.

This step can be repeated until the amount of data which needs to be tested for a complete match is reduced to a reasonable amount.

Although, all the processing steps could be carried out in real time, preferably, the extracted sections are stored in a store and extracted as and when needed.

Preferably, the extracted sections are input to a comparison stage; compared with specific examples of end point identifiers; and discarded if the section does not match a specific example in the comparison stage.

An example of a method of extracting sections of a data stream will now be described with reference to the accompanying drawings in which:
Figure 1 is a block diagram of a typical system to which the method of the present invention is applied;
Figure 2 illustrates domain name and DNIV state machines;
Figure 3 illustrates state machines when used with the '.' anchor point;
Figure 4 illustrates state machine modifications for digram operation;
Figure 5 illustrates an example of extracting a page title;
Figure 6 shows an example of searching for a hyperlink; and,
Figure 7 shows an example of a search for a data and time format.

The present invention describes a technique which allows structural forms of data to be identified and extracted, such as identifying and extracting data based on a it being a domain name, an email address, or a data and time format. Other examples include, in search engine indexing automating the process of document retrieval and classification, e.g. if using a web spider for extraction of hyperlinks from html documents in order to construct a list of URLs to subsequently retrieve. Given the vast quantities of html content available on the Internet efficient extraction of hyperlinks from web pages is required. Another example is use in real time SPAM classification. Part of SPAM classification involves the identification of URLs/URIs, domain names or email addresses associated with SPAM objects. Such identification is used with whitelist/blacklists of SPAM items to filter out SPAM content. Due to the large quantities of SPAM present in modem communications networks, an efficient identification and filtering of SPAM content is desired.

A section of data, typically representing an end point identifier, label, or meta-data, which section is to be identified and extracted, is broken down by encoding each subsection of the format within an individual state machine. Particular characters can then be used as bridges to move between one state machine and another, where a bridge character is used to move between the different machines describing a meta-data format. Thus, a complete format is defined by creating a number of smaller machines that describe each subsection of the format. The machines are then used with the bridges to create a super machine that describes the entire format. Complete traversal of the super machine from its start state to its terminal state is used to identify the end point identifier format. Anchors are signatures that are associated with the label of interest, in particular, single characters or sequences of characters that are statistically rare in free text, or binary data. This property can be used to quickly lock on to a location in free text that has a higher than average probability of being a subpart of the label of interest.

For example of the present invention may be described with respect to identification and extraction of a hyperlink consisting of a sequence of characters followed by a domain name e.g. href=http://www.roke.co.uk. In general a hyperlink can be identified by recognising the domain name part of the format. The domain name part of the hyperlink can be described using the following syntax: DNIV domain.domain[.domain] DNIV.

Within this syntax the following subgroups are identified:
[] - square brackets are used to signify one or more optional components. DNIV - this is the set of characters that are illegal within the domain name part. domain - this is the set of character that are legal within the domain name part.
. - the dot symbol is a bridge between two domain name parts.

In general the set of characters that compose the DNIV, and domain name parts of the syntax are defined by the standards for internet based computer names. DNIV is also defined by the expression - !domain.

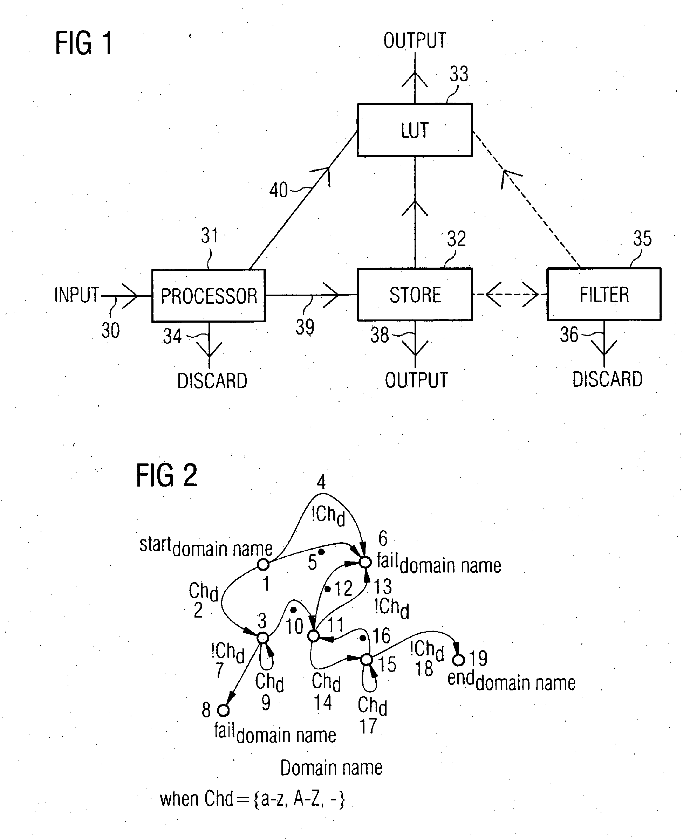

Fig. 1 illustrates a typical system for operating the method of the present invention. An input data stream 30 which could be from a store (not shown), or a real time data source, is input to a processor 31 which applies the method of the present invention. Whenever a section of the data stream satisfies the test criteria, the section is output 39 to a store 32, or output 40 to a comparison stage 33, such as a look up table. Data which is not extracted is discarded 34, although the discarded data steam could be subjected to additional tests, for example for an alternative label, or end user identifier. For convenience, the extracted sections of data may be stored before an optional filtering step 35 is applied and the sections which are filtered out can be returned to the store, or sent on for further processing in the comparison stage 33. Sections which are not extracted in the filter stage 35 are discarded 36. Thus, the output 38 of the extracted and optionally, filtered data stream may be obtained from the store 32, or as an output 39 from the comparison stage 33.

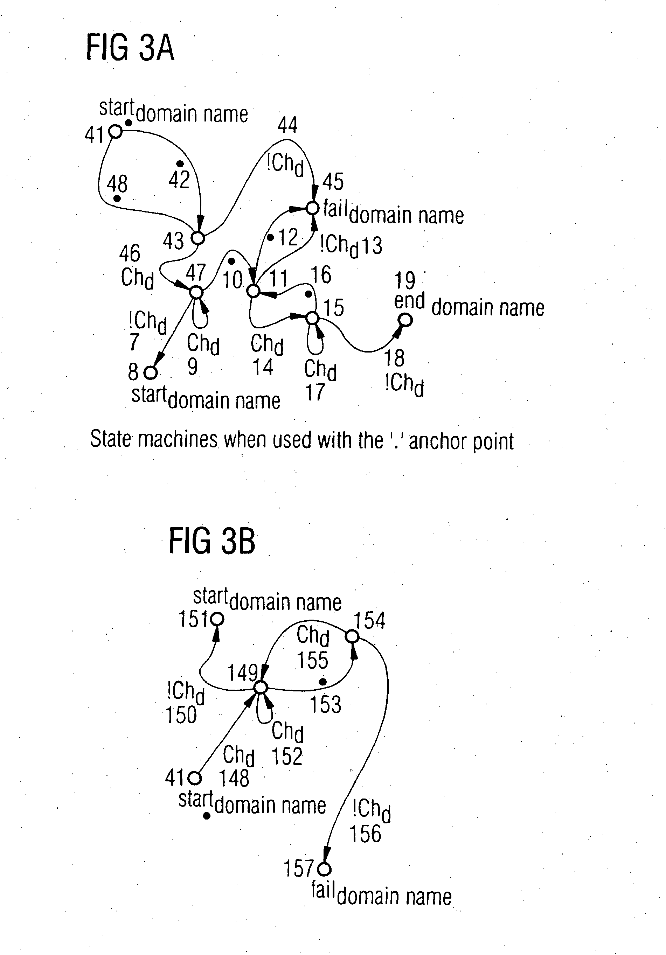

The mechanism for extracting sections of the data stream is described in more detail with respect to Figs. 2 and 3. Let a single valid domain name character be Ch_{d}, the term !Ch_{d} means not in the set Ch_{d} then an example of a possible state machine for the domain name is defined in Fig. 2. In the example the '.' symbols are examples of bridge characters. The '.' character is used as a bridge between the sub-domains of the complete domain name.

From start_{domain name} 1, if a valid domain name character Ch_{d} 2 is identified, the test moves on to the next point 3. If an invalid character 4, or bridge character 5, are found, the test fails 6. From point 3, an invalid character 7 causes a fail 8 and a valid character 9 loops back on itself, but a bridge character 10 moves the test on to the next point 11. From point 11 a bridge character 12, or an invalid character 13 cause a fail 6, whereas a valid character 14 moves on to the next point 15. A bridge character 16 moves to point 11, a valid character 17 loops back on itself to point 15 and an invalid character 18 moves to the end point, end_{domain name} 19. For start_{DNIV}, an invalid character moves the test to end_{DNIV} (not shown). Having determined a start and end point for the domain name, the series of sequences making up this section of the data stream can be extracted for storage, or further processing. In the state machine the domain name format is identified in a left to right fashion as the text is examined. However, in principal the sub parts of the format can be identified in any order.

The label or end point identifier which is used to determine which sections of the data stream are extracted is made up of parts, some of which may be statistically rarer than others in free text. Consequently, an effective method to increase the practical performance of the identification algorithm is to look for these parts before the others. These parts, known as anchor points, can be used to 'lock on' to a position in the data stream that may be an instance of the end point identifier type sought.

Once an anchor point has been found in the data stream, validation of the data is carried out by parsing outwards (forward and backwards) around the anchor point. For the domain name example the '.' symbols are statistically rarer in free text than the other characters contained in the domain name format. This modification splits the domain name algorithm into two distinct machines as shown in Fig. 3a and Fig 3b. The identification algorithm first finds the signature '.domain' using the machine defined in Fig 3a and then starting at the '.' position in the data stream moves backwards and applies the smaller state machine defined in Fig 3b. The domain name part is validated first as failure at any point allows the algorithm to continue moving forward through the data stream without expending unnecessary effort on validating the smaller part. From start point, start._{domain name} 41, a bridge character 42 moves the test to the next point 43, where an invalid character 44 causes the test to fail 45 and a valid character 46 moves on to the next point 47. From here the process steps and results are the same as for the equivalent reference numbers in Fig. 2. From point 43 a bridge character 48 moves back to start._{domam name} 41. The machine in Fig 3A moves from left to right starting at point 41, whereas the machine in Fig 3B moves from right to left starting at 41. So for the pattern roke.co.uk, Fig 3A would find the part '.co.uk' at character position 5. Fig 3B would then start at position 5 and move from right to left to find the part 'roke'. The pattern roke.co.uk is then subsequently extracted.

The series of steps in Fig 3B starts at the same position in the text as point 41, a valid character 148 takes us from start_{domain name} 41 to the next state 149. From this state 149 an invalid domain name character 150 identifies the start of the complete pattern 151 (i.e. start_{domain name} or the 'r' in roke.co.uk). A valid domain name character 152 loops back on itself. A dot 153 indicates another sub-domain and moves us to the next state 154. From here a valid domain name character 155 moves us back and an invalid domain name character 156 results in failure 157.

Finally performance can be further improved by exploiting the machine word size. The meta-data format is defined as a collection of bytes. However, modem processors have register sizes that are multiple bytes wide. The machine register size can be exploited by adapting the state machines so that the state machine transitions are labelled with multi byte values rather than single byte values. In this instance the input byte stream is processed multiple bytes at a time instead of a single byte at a time. Thus, in effect the multi-byte state machine runs multiple instances of the single byte state machine each starting at different byte offset, i.e. the throughput is increased by processing the data in multiple machines operating in parallel.

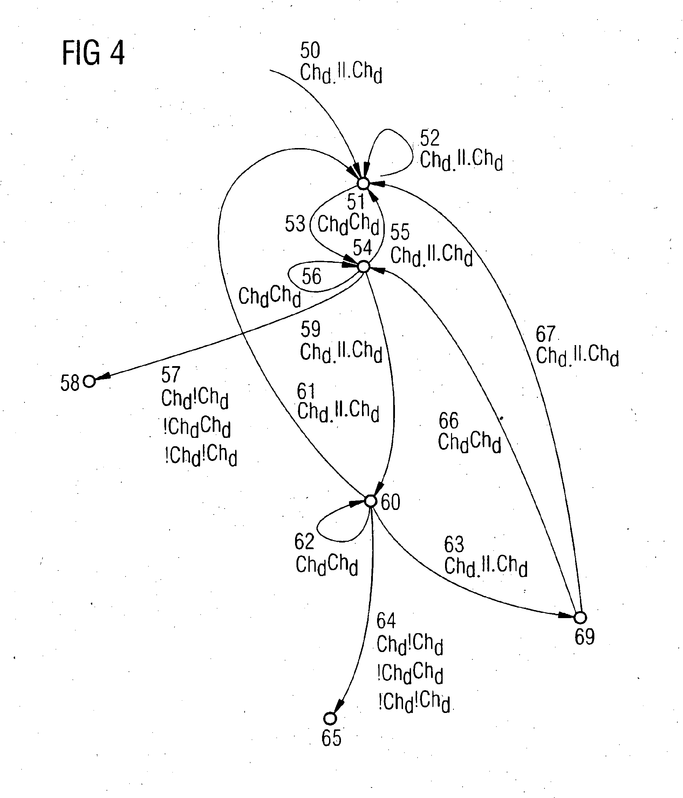

An example of a simplified '.domain' state machine that processes two bytes at a time is shown in Fig. 4. Starting the state machine at the upper most arc in Fig. 4, the machine is entered when any of the 16 bit patterns defined by Ch_{d}. or .Ch_{d} is found. Let a single valid domain name character be Ch_{d}, the term !Ch_{d} means not in the set Ch_{d}. The term Ch_{d}Ch_{d} means a valid domain name character followed by a valid domain name character. The term Ch_{d}!Ch_{d} means a valid domain name character followed by an invalid domain name character. The term !Ch_{d}Ch_{d} means an invalid domain name character followed by a valid domain name character. The term Ch_{d}. means a valid domain name character followed by a dot character. The term Ch_{d} means a dot character followed by a valid domain name character. The machine is started by finding a pair of bytes defined by either of the following sequences Ch_{d}. or .Ch_{d} 50 followed by a valid domain name that satisfies this version of the domain name state machine.

Thus, the algorithm no longer looks for the symbol specifically but searches for a 16 bit sequence containing the '.' symbol. This modification also has the advantage that a 16 bit sequence containing an '.' is statistically rarer than a bare '.' symbol. Consequently, the algorithm rejects a larger fraction of potential alignments by enforcing the formatting of the characters around the '.'.

The machine is started by finding a pair of bytes defined by either of the following sequences, Ch_{d}. or .Ch_{d} 50 and in this case the test moves to the next point 51. At point 51 if the next two bytes are Ch_{d}. or .Ch_{d} the search loops back on itself 52. At point 51 if the next two bytes are Ch_{d}Ch_{d} 53 the test moves to the next point 54. At point 54 if the next two bytes are Ch_{d}. or .Ch_{d} 55 the search moves back to point 51. At point 54 if the next two bytes are Ch_{d}Ch_{d} the search loops back on itself 56. At point 54 if the next two bytes are any of the following Ch_{d}!Ch_{d} or !Ch_{d}Ch_{d} or Ch_{d}!Ch_{d} 57 the search has failed 58. At point 54 if the next two bytes are Ch_{d}. or .Ch_{d} 59 then the search moves to point 60. At point 60 if the next two bytes are Ch_{d}. or .Ch_{d} 61 then the search moves to point 51. At point 60 if the next two bytes are Ch_{d}Ch_{d} 62 then the search loops back on itself. At point 60 if the next two bytes are Ch_{d}!Ch_{d} or !Ch_{d}Ch_{d} or !Ch_{d}!Ch_{d} 64 then a domain name has been found 65. At point 60 if the next two bytes are Ch_{d}. or .Ch_{d} 63 then a domain name has been found 69. At point 69 if the next two bytes are Ch_{d}Ch_{d} 66 then the search moves to point 54. At point 69 if the next two bytes are Ch_{d}. or .Ch_{d} 67 then the search moves back to point 51.

In summary, the invention uses a set of state machines to describe the format of an end point identifier, label or meta-data. A super machine is created by linking the smaller machines using bridge characters. Anchor points may be defined in the format, so these are identified first to increase throughput. A further feature is that multi-byte versions of the state machines may be defined to enable the input to be processed in parallel. Rather than process the byte stream 8 bits at a time a pointer is used to access the data several bytes at a time. Each vertex of the machine is labelled using a multi byte value. The value of the sequence of bytes pointed at by the pointer is then used to traverse the vertices of the machine. This means that several bytes of the input are processed for each transition of the machine which improves the throughput. In effect this can be thought of as running several single character machines in parallel i.e. the state machine design exploits the machine word size to enable parallel processing in software.

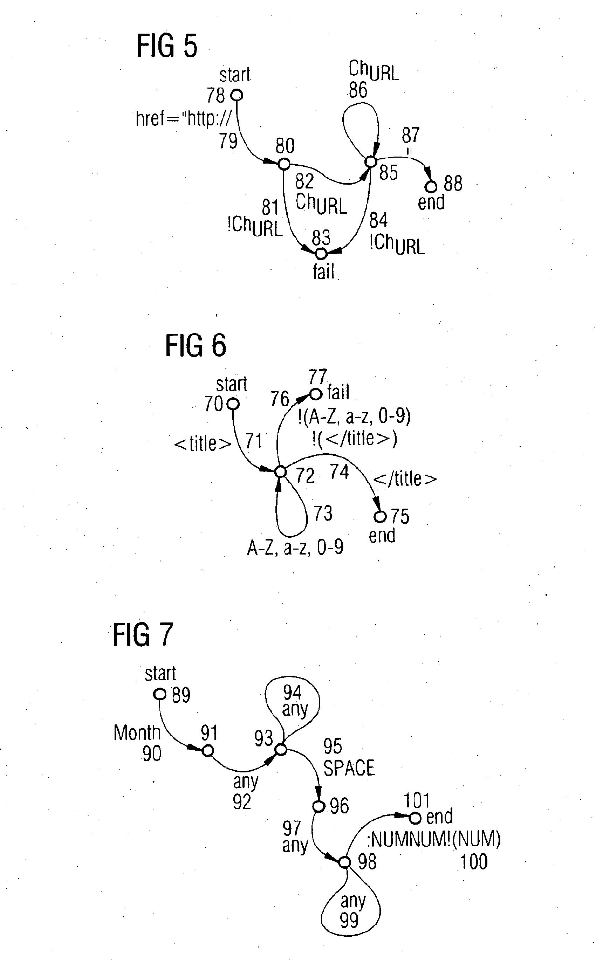

More generally, in the example of searching for a hyperlink. The pattern is:
href="http:// URL "
In this case the pair of labels are:
href="http:// and "
The labels are separated by a sequence of characters from the valid set of characters that can be used within a URL. The example is shown in Fig. 5

Starting at point 78, the sequence href="http:// 79 takes the search to point 80. From point 80 a symbol from the set Ch_{URL} (the set of valid URL characters) 82 takes the search to point 85. From point 80 a symbol that is not in the set ChURL (!ChURL) 81 takes the search to point 83 and the search fails. From point 85 a valid URL character 86 loops the search back to point 85. From point 85 an invalid URL character 84 results in failure 83. From point 85 the quote character 87 takes the search to point 88. At this point a valid hyperlink has been found and can be extracted.

When searching a page for a title, having a pattern
<title> page title </title>
In this case the pair of labels are:
<title> and </title>
The labels are separated by a sequence of characters from the set A - Z, a - z, 0 - 9 as illustrated in Fig. 6

Starting at 70 the sequence <title> 71 takes the search to point 72. At point 72 the characters A-Z, a-z, 0-9 (73) loop the search back to point 72. At point 72 the symbols in the set !(A-Z, a-z, 0-9)!(</title>) 76 take the search to point 77 and the search fails. At point 72 the sequence </title> 74 takes the search to point 75 and the end. Thus, the identification of the pair of sequences <title> </title> identifes a page title between them.

Alternatively, when the search may be for a Date - Time format.
The pattern is:
Jan 01 2008 SPACE 10:20:22
In this case the pair of labels are:
Month and :NUM NUM !(NUM)
The month can be one from the set of patterns Jan, Feb, Mar, Apr, May, Jun, Jul, Aug, Sep, Oct, Nov, Dec. NUM indicates one of the characters 0 - 9 and !(NUM) means not one of the characters 0 - 9. In this case a bridge character is needed to link the date and time parts. A suitable bridge is the SPACE character after the year. The example is shown in Fig. 7.

Starting at point 89, a valid month 90 moves the search to point 91. From point 91 any character 92 takes the search to point 93. At point 93 any character loops the search back to point 93. At point 93 the SPACE character 95 takes the search to point 96. At point 96 any character 97 takes the search to point 98. At point 98 any character 99 loops the search back to point 98. At point 98 the sequence :NUMNUM!(NUM) 100 completes the search 101.

The present invention allows sections of data to be identified and extracted. Although the examples have been described using hyperlinks and domain names, the invention can be applied to many other end user identifier types including email address identification; URI/URL identification; Session Initiation Protocol(SIP) URI identification; E.164 telephone number detection; tag detection in other data formats; IP addresses, port range, protocol and session identifier detection; xml data structures, xml objects; HTML structures and objects; and detection of content types and identification of content from packet payloads. The basic method can be improved to increase throughput and processing speed by use of an anchor structure, or looking for an ngram containing an anchor symbol.

The combination of separate encoded sequences represented by smaller state machines into a group of state machines to produce the full format of an end user identifier, or label, allows labels of arbitrary complexity to be detected. Further improvements in throughput arise from the use of parallel processing, exploiting machine word size to run several instances of a super machine in parallel.

## Claims

1. A method of extracting sections of a data stream comprising end point identifiers, the sections comprising a set of sequences; wherein each sequence is encoded separately and coupled together to define the section; the method comprising determining a combination of at least two sequences of the set; comparing the combination of sequences with sequences in the data stream; and rejecting extraction of the section if the combination of sequences does not match any of the sequences in the section of the data stream; and continuing the search for further instances of the combination of sequences; or accepting extraction of the section if the combination of sequences in any order matches sequences in the section of the data stream; wherein the combination of sequences comprises an anchor, an anchor being a single character or a sequence of characters that is statistically rare in free text, or binary data, and a sequence adjacent to the anchor; and if the combination of sequences does not include a start and end marker for the section, a search for the start and end markers is carried out before the section is extracted.

2. A method according to claim 1, wherein a sequence comprises a series of bits having a predetermined format, such as an anchor, or a bridge.

3. A method according to claim 2, wherein the anchor is a low probability sequence in the data stream.

4. A method according to claim 3, wherein the probability of occurrence is less than 1%.

5. A method according to any preceding claim, wherein the combination of sequences comprises the first and last sequence of the section.

6. A method according to any preceding claim, wherein the combination of sequences comprises more than one sequence associated with an anchor; wherein the combination of anchor and sequences to form the section is determined; and wherein the section is only extracted if all sequences forming the section are present.

7. A method according to any preceding claim, wherein searches for combinations of sequences are carried out in parallel on different sections of the data stream.

8. A method according to any preceding claim, wherein each sequence comprises a series of bits of data, or multiple bytes of data.

9. A method according to any preceding claim, wherein the end point identifiers comprise one of a domain name; an email address; a uniform resource locator; a telephone number; or a date and time format.

10. A method according to any preceding claim, wherein each sequence is encoded in a separate state machine.

11. A method according to claim 10, wherein multiple state machines are combined to represent the section.

12. A method according to claim 10 or claim 11, wherein a bridge provides a transition between separate state machines representing the sequences of the section

13. A method according to any preceding claim, the method further comprising filtering the extracted sections of the data stream; the filtering comprising determining a set of characters of interest; testing each section of the data stream for the presence of one or more of the set of characters of interest; and extracting sections in which at least one of the characters is present.

14. A method according to claim 13, comprising determining a further set of characters of interest; testing for at least one character from the further set of characters in the portion of the data stream; and extracting sections in which at least one of the characters from the further sets of characters is also present in the section.

15. A method according to any preceding claim, wherein the extracted sections are stored in a store.

16. A method according to any preceding claim, wherein the extracted sections are input to a comparison stage; compared with specific examples of end point identifiers; and discarded if the section does not match a specific example in the comparison stage.

## Patentansprüche

1. Verfahren zur Extraktion von Abschnitten aus einem Datenstrom mit Endpunktidentifizierern, wobei die Abschnitte eine Gruppe von Sequenzen umfassen; wobei die Sequenzen jeweils separat codiert werden und miteinander verknüpft werden, um den Abschnitt zu definieren; wobei das Verfahren umfasst: das Bestimmen einer Kombination von mindestens zwei Sequenzen einer Gruppe; das Vergleichen der Kombination von Sequenzen mit Sequenzen in dem Datenstrom; und das Ablehnen der Extraktion des Abschnitts, wenn die Kombination von Sequenzen nicht mit einer der Sequenzen in dem Abschnitt des Datenstroms übereinstimmt; und das Fortsetzen der Suche nach weiteren Instanzen der Kombination von Sequenzen; oder das Zustimmen zur Extraktion des Abschnitts, wenn die Kombination von Sequenzen in einer beliebigen Ordnung mit Sequenzen in dem Abschnitt des Datenstroms übereinstimmt; wobei die Kombination von Sequenzen einen Anker umfasst, wobei ein Anker ein einzelnes Zeichen oder eine Zeichenfolge ist, die in freiem Text statistisch selten ist, oder binäre Daten, und eine dem Anker benachbarte Sequenz; und das Durchführen einer Suche nach den Start- und Endmarkern vor dem Extrahieren des Abschnitts, wenn die Kombination von Sequenzen keinen Start- und Endmarker für den Abschnitt enthält.

2. Verfahren nach Anspruch 1, wobei eine Sequenz eine Reihe von Bits mit einem vorgegebenen Format umfasst, wie zum Beispiel einen Anker oder eine Brücke.

3. Verfahren nach Anspruch 2, wobei der Anker eine Sequenz mit niedriger Wahrscheinlichkeit in dem Datenstrom ist.

4. Verfahren nach Anspruch 3, wobei die Auftrittswahrscheinlichkeit geringer als 1 % ist.

5. Verfahren nach einem der vorhergehenden Ansprüche, wobei die Kombination von Sequenzen die erste und die letzte Sequenz des Abschnitts umfasst.

6. Verfahren nach einem der vorhergehenden Ansprüche, wobei die Kombination von Sequenzen mehr als eine Sequenz in Verbindung mit einem Anker umfasst; wobei die Kombination von Anker und Sequenzen, die den Abschnitt bilden soll, bestimmt wird; und wobei der Abschnitt nur extrahiert wird, wenn alle Sequenzen, die den Abschnitt bilden, vorliegen.

7. Verfahren nach einem der vorhergehenden Ansprüche, wobei die Suchen nach Kombinationen von Sequenzen an verschiedenen Abschnitten des Datenstroms parallel durchgeführt werden.

8. Verfahren nach einem der vorhergehenden Ansprüche, wobei jede Sequenz eine Reihe von Bits von Daten oder mehrere Bytes von Daten umfasst.

9. Verfahren nach einem der vorhergehenden Ansprüche, wobei die Endpunktidentifizierer eine der Angaben enthalten: einen Domänennamen; eine Emailadresse; einen einheitlichen Quellenanzeiger; eine Telefonnummer; oder ein Daten- und Zeitformat.

10. Verfahren nach einem der vorhergehenden Ansprüche, wobei jede Sequenz in einer separaten Zustandsmaschine codiert wird.

11. Verfahren nach Anspruch 10, wobei zur Darstellung des Abschnitts mehrere Zustandsmaschinen kombiniert werden.

12. Verfahren nach Anspruch 10 oder Anspruch 11, wobei eine Brücke einen Übergang zwischen separaten Zustandsmaschinen, die die Sequenzen des Abschnitts darstellen, bildet.

13. Verfahren nach einem der vorhergehenden Ansprüche, ferner umfassend das Filtern der extrahierten Abschnitte des Datenstroms; wobei das Filtern das Bestimmen einer Gruppe von interessierenden Zeichen; das Überprüfen jedes Abschnitts des Datenstroms auf das Vorliegen einer oder mehrerer Gruppen von interessierenden Zeichen; und das Extrahieren von Abschnitten, in denen mindestens eines der Zeichen vorliegt ist, umfasst.

14. Verfahren nach Anspruch 13, umfassend das Bestimmen einer weiteren Gruppe von interessierenden Zeichen; das Überprüfen auf mindestens ein Zeichen aus der weiteren Gruppe von Zeichen in dem Teil des Datenstroms; und das Extrahieren von Abschnitten, in denen mindestens eines der Zeichen aus den weiteren Gruppen von Zeichen ebenfalls in dem Abschnitt vorhanden ist.

15. Verfahren nach einem der vorhergehenden Ansprüche, wobei die extrahierten Abschnitte in einem Speicher gespeichert werden.

16. Verfahren nach einem der vorhergehenden Ansprüche, wobei die extrahierten Abschnitte einer Vergleichsstufe zugeführt werden; mit bestimmten Beispielen von Endpunktidentifizierern verglichen werden; und verworfen werden, wenn der Abschnitt nicht mit einem bestimmten Beispiel in der Vergleichsstufe übereinstimmt.

## Revendications

1. Procédé d'extraction de sections d'un flux de données comprenant des identifiants de point d'extrémité, les sections comprenant un ensemble de séquences ; dans lequel chaque séquence est codée séparément et couplée aux autres pour définir la section ; le procédé comprenant la détermination d'une combinaison d'au moins deux séquences de l'ensemble ; la comparaison de la combinaison de séquences à des séquences dans le flux de données ; et le rejet de l'extraction de la section si la combinaison de séquences ne correspond à aucune des séquences dans la section du flux de données ; et la poursuite de la recherche pour trouver d'autres instances de la combinaison de séquences ; ou l'acceptation de l'extraction de la section si la combinaison de séquences dans n'importe quel ordre correspond à des séquences dans la section du flux de données ; dans lequel la combinaison de séquences comprend une ancre, une ancre étant un caractère unique ou une séquence de caractères qui est statistiquement rare dans un texte libre, ou des données binaires, et une séquence adjacente à l'ancre ; et si la combinaison de séquences ne comporte pas un marqueur de début et de fin pour la section, une recherche des marqueurs de début et de fin est exécutée avant que la section soit extraite.

2. Procédé selon la revendication 1, dans lequel une séquence comprend une série de bits ayant un format prédéterminé, telle qu'une ancre ou un pont.

3. Procédé selon la revendication 2, dans lequel l'ancre est une séquence ayant une faible probabilité dans le flux de données.

4. Procédé selon la revendication 3, dans lequel la probabilité d'occurrence est inférieure à 1 %.

5. Procédé selon une quelconque revendication précédente, dans lequel la combinaison de séquences comprend la première et la dernière séquence de la section.

6. Procédé selon une quelconque revendication précédente, dans lequel la combinaison de séquences comprend plus d'une séquence associée à une ancre ; dans lequel la combinaison d'une ancre et de séquences pour former la section est déterminée ; et dans lequel la section est extraite uniquement si toutes les séquences formant la section sont présentes.

7. Procédé selon une quelconque revendication précédente, dans lequel les recherches de combinaisons de séquences sont exécutées en parallèle sur différentes sections du flux de données.

8. Procédé selon une quelconque revendication précédente, dans lequel chaque séquence comprend une série de bits de données ou de multiples octets de données.

9. Procédé selon une quelconque revendication précédente, dans lequel les identifiants de point d'extrémité comprennent un parmi un nom de domaine ; une adresse de courrier électronique ; un URL ; un numéro de téléphone ; ou un format de date et d'heure.

10. Procédé selon une quelconque revendication précédente, dans lequel chaque séquence est codée dans une machine d'états distincte.

11. Procédé selon la revendication 10, dans lequel de multiples machines d'états sont combinées pour représenter la section.

12. Procédé selon la revendication 10 ou 11, dans lequel un pont fournit une transition entre des machines d'états distinctes représentant les séquences de la section.

13. Procédé selon une quelconque revendication précédente, le procédé comprenant en outre le filtrage des sections extraites du flux de données, le filtrage comprenant la détermination d'un ensemble de caractères d'intérêt ; le test de chaque section du flux de données pour détecter la présence d'un ou de plusieurs parmi l'ensemble de caractères d'intérêt ; et l'extraction des sections dans lesquelles au moins un des caractères est présent.

14. Procédé selon la revendication 13, comprenant la détermination d'un autre ensemble de caractères d'intérêt ; le test pour détecter au moins un caractère de l'autre ensemble de caractères dans la partie du flux de données ; et l'extraction des sections dans lesquelles au moins un des caractères des autres ensembles de caractères est également présent dans la section.

15. Procédé selon une quelconque revendication précédente, dans lequel les sections extraites sont stockées dans un dispositif de stockage.

16. Procédé selon une quelconque revendication précédente, dans lequel les sections extraites sont entrées dans un étage de comparaison ; comparées à des exemples spécifiques d'identifiants de point d'extrémité ; et refusées si la section ne correspond pas à un exemple spécifique dans l'étage de comparaison.
